# EUROPÄISCHE PATENTSCHRIFT

(11) **EP 0 604 720 B1**
(45) Veröffentlichungstag und Bekanntmachung des Hinweises auf die Patenterteilung: **02.04.1997**
(21) Anmeldenummer: 93116536.9
(22) Anmeldetag: 13.10.1993
(51) Int. Cl.: A62D 3/00, B01D 53/34, B01D 53/00

(54) **Verfahren zur Entfernung von Ammoniak aus dem bei der Behandlung von Eiweiss oder deren Abbauprodukten entstehenden Brüden**
Process for the elimination of ammonia from the vapours generated during treatment of proteins or of their degradation products
Procédé pour l'élimination de l'ammoniaque des vapeurs regénérés pendant le traitement des protéines ou de leurs produits de dégradation

(30) Priorität: 30.11.1992 DE 4240152
(43) Veröffentlichungstag der Anmeldung: 06.07.1994
(73) Patentinhaber: Schott Glaswerke, 55122 Mainz (DE); FLEISCHMEHLFABRIK BRÖGBERN GmbH & Co., D-49811 Lingen-Brögbern (DE); Carl-Zeiss-Stiftung trading as SCHOTT GLASWERKE, 55122 Mainz (DE)
(72) Erfinder: Breitenbücher, Klaus, Dr., D-55299 Nackenheim (DE); Oberthür, Radulf, Dr., D-49844 Bawinkel (DE)

(56) Entgegenhaltungen:
- EP-A- 0 440 932
- EP-A- 0 514 902
- US-A- 3 985 523
- DATABASE WPI Week 7940, Derwent Publications Ltd., London, GB; AN 7972795B & JP-A-54 109 070 (MITSUBISHI HEAVY IND)
- DATABASE WPI Week 7940, Derwent Publications Ltd., London, GB; AN 7972795B & JP-A-54 109 070

## Beschreibung

Gegenstand der Erfindung ist ein Verfahren zur Entfernung von Ammoniak aus dem bei der Behandlung von Eiweiß oder dessen Abbauprodukte enthaltenden wäßrigen Gemischen durch Kochen, Sterilisieren oder Eindampfen insbesondere im Zuge der Tiermehlherstellung entstehenden carbonsäure- und ammoniakhaltigen Wasserdampf (Brüden) durch Absorption in mineralsäurehaltigen Lösungen.

Bei Koch-, Sterilisations- und Trocknungsprodukten entstehen bei der Verarbeitung tierischer und pflanzlicher Produkte und Reststoffe, z. B. bei dem Eindampfen und Trocknen von Klärschlämmen, bei der Behandlung von Abwässern aus Verfahren zur Verarbeitung derartiger Produkte und Reststoffe (Dampfstrippen usw.), insbesondere bei der Sterilisation und Trocknung von Reststoffen der Fleischmehlherstellung Brüden, die häufig hohe Konzentrationen an Ammoniak und ggf. an flüchtigen organischen Säuren aufweisen. Das Ammoniak entsteht dabei durch die Zersetzung von Eiweiß oder dessen Abbauprodukten.

Die Brüden müssen gereinigt werden, da sie aus gewerbehygienischen Gründen (Geruchsbelästigung) nicht ungereinigt in die Umwelt gelangen dürfen. Dazu werden die Brüden kondensiert. Diese Brüdenkondensate besitzen NH₄-N-Konzentrationen von bis zu 2 500 mg/l (in Extremfällen bis zu 10 000 mg/l) bei einem CSB von bis zu 15 000 mg/l (in Extremfällen bis zu 100 000 mg/l) und können nach verschiedenen Verfahren gereinigt werden.

In der Regel werden die Brüdenkondensate biologisch gereinigt. Die Steuerung dieser biologischen Prozesse zur Stickstoff- und Kohlenstoff-Eliminierung erweist sich unter den stark schwankenden Belastungsbedingungen dieser Industriebetriebe als sehr schwierig. Darüber hinaus ist ein sehr hoher Investitions- und Platzbedarf für die entsprechenden aeroben Belebungsbecken erforderlich, um die notwendige niedrige Raumbelastung zur C-N Eliminierung einzuhalten. Weiterhin entsteht bei diesen biologischen Reinigungsverfahren ein hoher Energiebedarf für den Sauerstoffeintrag zur NH₄-Oxidation. Anaerob-biologische Verfahren sind zur Reinigung der Brüdenkondensate nur wenig geeignet, da sie zwar in der Lage sind, die Kohlenstofffracht der Kondensate abzubauen, jedoch den NH₄-Anteil weitgehend unverändert lassen. Darüber hinaus kann eine hohe NH₄-Konzentration eine toxische Wirkung auf die anaeroben Mikroorganismen ausüben.

Da die biologischen Reinigungsverfahren sehr aufwendig sind und darüber hinaus der Wertstoff NH₃ vollständig abgebaut wird, hat es nicht an Vorschlägen gefehlt, den NH₃-Anteil der Brüdenkondensate in wertvollerer Form zurückzugewinnen. Eine Übersicht über diese Verfahren, die im folgenden nur kurz abgehandelt werden, ist in Chem.-Ing.-Tech. 62 (1990) Nr. 3, Seite 175 bis 182 zu finden. Bekannt ist die Fällung des Ammoniak-Anteils mit Magnesiumphosphat als Magnesiumammoniumphosphat (MAP-Verfahren). Das dabei anfallende Magnesiumammoniumphosphat ist dann nicht brauchbar, wenn in der Lösung toxische Bestandteile vorliegen. Darüber hinaus ist das Magnesiumammoniumphosphat als Handelsprodukt verhältnismäßig wertlos. Bekannt ist ferner, das ammoniak-haltige Brüdenkondensat nach Zusatz von Natronlauge einer Luftstrippung zu unterwerfen und aus dem erhaltenen Ammoniak-Luft-Gemisch das Ammoniak durch Absorption mittels Schwefelsäure zu entfernen. Allerdings ist Ammoniumsulfat kein besonders wertvoller Rohstoff. Ferner ist es bekannt, das Brüdenkondensat einer Dampfstrippung zu unterziehen, wobei der entstehende ammoniakhaltige Dampf entweder in Schwefelsäure absorbiert oder zu einer wäßrigen Ammoniaklösung kondensiert wird, in der der Ammoniak-Gehalt etwa 10fach höher als in dem ursprünglichen Abwasser liegt. Höhere Produktkonzentrationen sind nur durch eine Zusätzliche Rektifikation erreichbar. Den Stripp-Verfahren haftet insbesondere der Nachteil an, daß die Ausgangslösung mit Natronlauge versetzt werden muß, wobei der pH-Wert bei dem Strippen mit Dampf höher liegen muß als bei dem Strippen mit Luft. Alle übrigen Reinigungsverfahren sind entweder noch unwirtschaftlicher oder führen nicht zu wiederverwertbaren Produkten.

Die Aufgabe der Erfindung besteht daher darin, ein Verfahren zur Entfernung von Ammoniak aus Carbonsäure- und ammoniakhaltigen Brüden zu finden, das einfacher und wirtschaftlicher durchgeführt werden kann als die bisher bekannten Verfahren.

Diese Aufgabe wird durch das im Patentanspruch 1 beschriebene Verfahren gelöst. Vorteilhafte weitere Ausgestaltungen des Verfahrens sind in den Unteransprüchen beschrieben.

Die Brüden werden bei einer wenigstens etwa der Sattdampftemperatur bei dem Behandlungsdruck entsprechenden Temperatur mit einer salpetersauren Ammoniumnitratlösung gewaschen. Es wird bevorzugt, wenn die Waschlösung eine hohe Konzentration von Ammoniumnitrat und eine sehr geringe Konzentration an Salpetersäure besitzt. Bevorzugt wird eine Salpetersäurekonzentration in der Ammoniumnitratlösung dergestalt, daß der pH-Wert der salpetersauren Ammoniumnitratwaschlösung etwa 1 bis 4 beträgt. Die Konzentration an Ammoniumnitrat in der Lösung soll zwischen 42 und 70 Gew.-% liegen. Unterschreitet man einen Ammoniumnitratgehalt von 42 Gew.-%, so entspricht die entstehende Stickstoffdüngerlösung nicht mehr einem im Düngemittelgesetz aufgeführten Düngemitteltyp. Überschreitet man einen Ammoniumnitratgehalt von 70 Gew.-%, so kann bereits bei Abkühlung auf 32 °C ein Teil des Ammoniumnitrats als festes Salz auskristallisieren.
Obwohl auch mit höheren Salpetersäurekonzentrationen, als einem pH 1 bis 4 entspricht, gearbeitet werden kann, wird doch der pH-Wert von 1 bis 4 bevorzugt, weil dann die abgezogene Sumpflösung entweder pH-neutral gehalten werden kann, oder mit einem minimalen Aufwand auf einen für die landwirtschaftliche Anwendung geeigneten pH gebracht werden kann.

Die Brüden werden in einer üblichen Gaswaschanlage, z. B. einer Füllkörperkolonne oder einem Sprühwäscher gewaschen, wobei die Waschflüssigkeit im Kreislauf geführt wird. Der pH-Wert der als Waschflüssigkeit benutzten salpetersauren Ammoniumnitratlösung wird durch Zudosieren von Salpetersäure aufrechterhalten. Die Temperatur der im Kreislauf geführten Waschlösung wird so eingestellt, daß der Wasserdampfdruck der Lösung in etwa dem der Brüden entspricht.

Das Ammoniak aus den Brüden wird dabei von dem geringen, ständig aufrechtgehaltenen Überschuß an Salpetersäure aus den Brüden herausgewaschen. Bei der Reaktion des Ammoniaks mit der Salpetersäure tritt eine positive Wärmetönung auf, die für eine Erwärmung der Lösung und damit für eine beliebige Aufkonzentrierung der Waschlösung sorgt, während die Brüden mit weitgehend unveränderter Temperatur den Wäscher wieder verlassen. Durch Einstellung der Temperatur der Waschlösung kann die Konzentration an Ammoniumnitrat in der Lösung geregelt werden. Wird die Temperatur so eingestellt, daß Wasserdampf aus den Brüden in der Waschlösung kondensiert, so erzielt man eine Verdünnung. Läßt man die Waschlösung ungekühlt oder erwärmt sie zusätzlich, verdampft aus der Waschlösung Wasser und es tritt eine Konzentrierung auf. Selbstverständlich kann die Konzentration auch über die Zugabe von Wasser geregelt werden.

Üblicherweise erfolgt das Waschen der Brüden bei einer Temperatur der Waschlösung von 105 bis 120 °C und Atmosphärendruck. Es ist jedoch auch möglich, die Brüden bei einer Temperatur der Waschlösung von 107 bis 165 °C und einem Druck von etwa 108 bis 500 kPa zu waschen. Die Erzeugung der Brüden und das Waschen unter Überdruck findet vor allem dann statt, wenn die Brüden einer Brüdenkompression unterworfen werden. Selbstverständlich können die Brüden auch bei Unterdruck gewaschen werden, insbesondere bei einer Temperatur der Waschlösung von 65 bis 118 °C und einem Druck von 20 bis 95 kPa, was sich immer dann anbietet, wenn auch die Erzeugung der Brüden, d. h. die Behandlung der Eiweiß oder dessen Abbauprodukte enthaltenden wässrigen Gemischen bei Unterdruck stattfindet. Die Verwendung von Unterdruck bietet sich vor allem dann an, bei mehrstufiger Verdampfung oder wenn unter Verwendung von Abwärme aus Brüden unter Unterdruck verdampft wird.

Im Verlauf des Auswaschprozesses reichert sich entweder die im Kreislauf geführte Waschlösung an Ammoniumnitrat an oder ihr Volumen nimmt zu. Die Ausschleusung des gebildeten Ammoniumnitrats aus dem Waschkreislauf kann dadurch geschehen, daß der überschüssige Teil der Waschlösung aus dem Kreislauf entfernt wird. Falls die Konzentration der Ammoniumnitratlösung passend gewählt wird, kann die so erzeugte Lösung direkt als Dünger engesetzt werden. Es ist aber auch möglich, der Waschlösung einen Teilstrom zu entnehmen, diesen über einen Kristallisator zu leiten, in dem ein Teil des gelösten Ammoniumnitrats durch Abkühlung auskristallisiert wird und den an Ammoniumnitrat abgereicherten Teilstrom wieder in die Waschlosung zurückzugeben. Auf diese Weise läßt sich auch festes Ammoniumnitrat unschwer erzeugen. Eine weitere Möglichkeit besteht darin, der warmen abgezogenen Ammoniumnitrat-Lösung, vorzugsweise bei einer Konzentration von 57 Gew.-%, Harnstoff zuzusetzen, so daß eine marktgängige Ammoniumnitrat-Harnstoff-Lösung mit 27 - 28% N, mindestens aber 25 % N, erhalten wird.

Die Konzentration der Salpetersäurelösung, mit der der gewünschte pH-Wert in der Waschlösung aufrecht erhalten wird, ist unkritisch. Durch die gute Regelmöglichkeit des Verfahrens kann eine beliebig konzentrierte Salpetersäurelösung eingesetzt werden, d. h. sowohl niedrigkonzentrierte, (HNO₃-Gehalt unter 40 Gew.-%) als auch hoch konzentrierte Salpetersäurelösungen (HNO₃-Gehalt über 65 Gew.-%). Eine etwa fehlende oder überschüssige Wassermenge kann durch eine entsprechende Temperaturführung der Waschlösung ergänzt bzw. abgeführt werden.

Das Verfahren kommt weitgehend ohne Zufuhr von Fremdwärme aus. Bei guter Isolierung der Anlagenteile ist eine zusätzliche Wärmezufuhr lediglich für das rasche Anfahren des Waschprozesses erforderlich. Während des Betriebs beschränkt sich der Energieverbrauch lediglich auf die Energie für das Umpumpen der Waschlösung, da die Transportenergie für die Brüden hin zum Kondensator ohne hin aufgebracht werden muß.

Nach dem Waschprozeß ist der Ammoniak-Anteil aus den Brüden weitestgehend entfernt, jedoch enthalten die Brüden noch die organischen Bestandteile, insbesondere die flüchtigen organischen Säuren. Die Brüden werden nunmehr abgekühlt und können, da sie frei sind von dem baterientoxischen Ammoniak, nunmehr sehr leicht in einer biologischen Reinigungsstufe weiter abgebaut werden. Bevorzugt wird es dabei, wenn das Brüdenkondensat anaerob-biologisch abgebaut wird, da dann die organischen lnhaltsstoffe in wertvolles und wiederverwendbares Methan umgewandelt werden.

Es ist bekannt, daß für den anaeroben Abbau ein optimaler pH-Bereich für die Methanisierung von 6,6 bis 7,4 erforderlich ist. Zur Einstellung dieses pH-Wertes kann die Eigenpufferung durch den Ammonium/Hydrogencarbonatpuffer durch Zugabe von ursprünglichen, ungewaschenen ammoniakhaltigen Brüden in den Kondensator vorgenommen werden. Die dadurch hervorgerufene geringe Belastung des Brüdenkondensates durch Ammoniak führt noch zu keiner Störung des anaeroben Abbaus. Bei dem anaeroben Abbau gegebenenfalls benötigte weitere Nährstoffe können z. B. aus dem Blutwasser der Blutverarbeitung oder dem Sterilisatorablauf der Tierkörperverwertung zudosiert werden. Es ist jedoch auch möglich, übliche Nährstoffe in reiner Form zuzusetzen. Der Ablauf des anaeroben Reaktors läßt sich problemlos aerobbiologisch weiter bis hin zu einer Wasserqualität reinigen, bei der das Abwasser ohne Schwierigkeiten in einen Vorfluter geleitet werden kann.

Die mit der Erfindung erzielbaren Vorteile bestehen insbesondere darin, daß unter weitgehender Nutzung der in den Brüden enthaltenen Stoffe und ihres Engeriepotentials die zunächst verdünnt vorliegenden Wertstoffe in einfacher und preiswerterweise konzentriert werden, um anschließend entweder als Pflanzennährstoffe oder als Engerieträger genutzt zu werden.

### Beispiel:

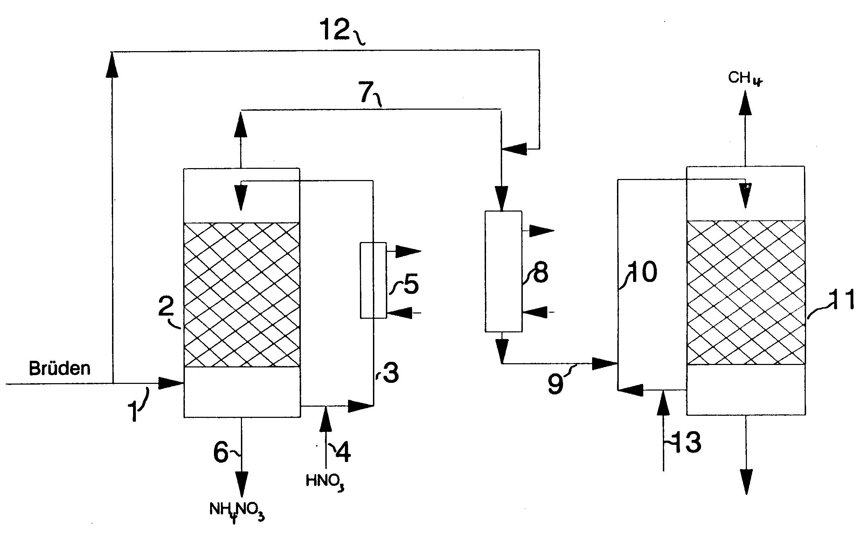

Das Verfahren wird in der in der Abbildung schemahaft dargestellten Vorrichtung durchgeführt. Die aus einem Verdampfer kommenden Brüden (1) mit einer Konzentration von 1 500 mg/kg NH₃ und 8 000 mg/kg organische Reststoffe (weitgehend flüchtige organische Säuren wie Essigsäure, Propionsäure, Buttersäure, lsobuttersäure, lsocapronsäure u. a.) werden in eine Absorptionskolonne (2) eingeleitet und im Gegenstrom mit einer 50prozentigen Ammonnitratlösung gewaschen, die mittels HNO₃ auf einen pH-Wert von 2 eingestellt war. Die Waschlösung hat eine Temperatur von 110 °C. Die Brüden haben eine Temperatur von 100 °C und einen Druck von 99 kPa. Die Waschlösung wird über die Leitung (3) in Kreislauf gefahren. Die durch die Absorption des Ammoniaks verbrauchte Salpetersäure wird pH-Wert-abhängig über die Leitung (4) in den Kreislauf eingespeist. Die Konzentration der Ammoniumnitratlösung wird über ihre Leitfähigkeit geregelt, indem die im Kreislauf geführte Waschlösung mittels eines Wärmeaustauschers (5) gekühlt oder erwärmt wird. Der sich bei der Absorption bildende Überschuß von Waschlösung wird kontinuierlich über die Leitung (6) aus dem Sumpf der Waschkolonne abgezogen. Die abgezogene Lösung ist schwach sauer bis neutral und besitzt eine Konzentration von 50 % NH₄NO₃ (= 612 g/l NH₄NO₃ bei 20 °C). Die am Kopf der Waschkolonne austretenden Brüden haben eine Konzentration von < 20 mg/kg NH₃ und 8 000 mg/kg organische Bestandteile. Sie werden über die Leitung (7) in den Kondensator (8) geleitet und dort kondensiert. Das Kondensat gelangt über die Leitung (9) in die Leitung (10), die der Kreislaufführung der zu behandelnden Lösung durch den anaeroben Reaktor (11) dient. In dem Reaktor (11) werden die in dem Kondensat enthaltenen organischen lnhaltsstoffe zu Methan abgebaut. Der im Kreislauf durch den Anaerobreaktor (11) geführten Lösung können, falls erforderlich, über die Leitung (12), den Kondensator (8) und die Leitung (9) unbehandeltes ammoniumhaltiges Brüdenkondensat zur Konstanthaltung des pH im Reaktor bzw. über die Leitung (13) noch weitere Nährstoffe zugeführt werden. Aus dem Sumpf des Anaerobreaktors (11) kann eine Flüssigkeit abgezogen werden, die bereits weitgehend vorgereinigt ist und nur noch einer geringen weiteren aeroben Reinigung bedarf, um in einem Vorfluter geleitet werden zu können. Das in dem Anaerobreaktor entstehende Methan kann am Kopf des Reaktors über die Leitung (14) entnommen werden.

## Patentansprüche

1. Verfahren der Entfernung von Ammoniak aus den carbonsäure- und ammoniakhaltigen Brüden, die bei der Behandlung von Eiweiß oder dessen Abbauprodukten enthaltenden wäßrigen Gemischen durch Kochen, Sterilisieren oder Eindampfen entstehen, durch Waschen der Brüden mit einer im Kreislauf geführten mineralsäurehaltigen Lösung,
**dadurch gekennzeichnet,**
daß man die Brüden mit einer salpetersauren Ammoniumnitrat-Lösung, die eine wenigstens etwa der Sattdampftemperatur der Brüden bei dem Behandlungsdruck entsprechende Temperatur aufweist, wäscht und daß die Ausschleusung des gebildeten Ammoniumnitrats durch Entnahme eines Teilstromes der Waschlösung erfolgt, wobei der Teilstrom entweder zur Weiterverwendung vollständig entfernt wird oder nach Auskristallisation eines Teils des gelösten Ammoniumnitrats der Waschlösung wieder zugegeben wird.

2. Verfahren nach Anspruch 1,
**dadurch gekennzeichnet,**
daß die Brüden bei einer Temperatur der Waschlösung von 105 bis 120 °C und bei Atmosphärendruck gewaschen werden.

3. Verfahren nach Anspruch 1,
**dadurch gekennzeichnet,**
daß die Brüden bei einer Temperatur der Waschlösung von 107 bis 165 °C und bei einem Druck von 108 bis 500 kPa gewaschen werden.

4. Verfahren nach Anspruch 1,
**dadurch gekennzeichnet,**
daß die Brüden bei einer Temperatur der Waschlösung von 65 bis 118 °C und einem Druck von 20 bis 95 kPa gewaschen werden.

5. Verfahren nach wenigstens einem der Ansprüche 1 bis 4,
**dadurch gekennzeichnet,**
daß die Brüden mit einer salpetersauren, 40 bis 70 Gew.-%-Ammoniumnitrat enthaltenden Lösung gewaschen werden.

6. Verfahren nach wenigstens einem der Ansprüche 1 bis 5,
**dadurch gekennzeichnet,**
daß die Brüden mit einer salpetersauren Ammoniumnitratlösung gewaschen werden, deren p_{H}-Wert 1 bis 4 beträgt.

7. Verfahren nach wenigstens einem der Ansprüche 1 bis 6,
**dadurch gekennzeichnet,**
daß die Konzentration von HNO₃ in der Ammoniumnitratlösung 0,1 bis 1 Gew.-% beträgt.

8. Verfahren nach wenigstens einem der Ansprüche 1 bis 7,
**dadurch gekennzeichnet,**
daß die Ammoniumnitrat-Konzentration in der Lösung durch Kühlung oder Heizung der Lösung geregeit wird.

9. Verfahren nach wenigstens einem der Ansprüche 1 bis 8,
**dadurch gekennzeichnet,**
daß die Brüden nach der Behandlung mit der salpetersauren Ammoniumnitratlösung kondensiert werden und die im Kondensat enthaltenen organischen Bestandteile in einer anaerob-biologischen Umwandlungsstufe in Methan umgewandelt werden.

10. Verfahren nach Anspruch 9,
**dadurch gekennzeichnet,**
daß der p_{H}-Wert in der anaerob-biologischen Umwandlungsstufe durch Zugabe unbehandelter Brüden zu gewaschenen Brüden geregelt wird.

## Claims

1. A process for the removal of ammonia from the vapours, containing carboxylic acid and ammonia, which are generated during the treatment of protein or aqueous mixtures containing the degradation products thereof by boiling, sterilization or evaporation, by washing the vapours with a circulated solution containing mineral acid, characterized in that the vapours are washed with a nitric-acid solution of ammonium nitrate which is at a temperature at least approximately corresponding to the saturated vapour temperature of the vapours at the treatment pressure, and in that the separation of the ammonium nitrate formed is achieved by discharging a partial stream of the washing solution, the partial stream either being completely removed for further use or being added to the washing solution again after part of the dissolved ammonium nitrate has been crystallized out.

2. A process according to Claim 1, characterized in that the vapours are washed at a temperature of the washing solution of from 105 to 120°C and at atmospheric pressure.

3. A process according to Claim 1, characterized in that the vapours are washed at a temperature of the washing solution of from 107 to 165°C and at a pressure of from 108 to 500 kPa.

4. A process according to Claim 1, characterized in that the vapours are washed at a temperature of the washing solution of from 65 to 118°C and at a pressure of from 20 to 95 kPa.

5. A process according to at least one of Claims 1 to 4, characterized in that the vapours are washed using a nitric-acid solution containing from 40 to 70% by weight of ammonium nitrate.

6. A process according to at least one of Claims 1 to 5, characterized in that the vapours are washed with a nitric-acid solution of ammonium nitrate whereof the pH value is 1 to 4.

7. A process according to at least one of Claims 1 to 6, characterized in that the concentration of HNO₃ in the ammonium nitrate solution is from 0.1 to 1% by weight.

8. A process according to at least one of Claims 1 to 7, characterized in that the concentration of ammonium nitrate in the solution is controlled by cooling or heating the solution.

9. A process according to at least one of Claims 1 to 8, characterized in that the vapours are condensed after the treatment with the nitric-acid solution of ammonium nitrate, and the organic constituents in the condensate are converted to methane in an anaerobic biological conversion step.

10. A process according to Claim 9, characterized in that the pH value in the anaerobic biological conversion step is controlled by the addition of untreated vapours to washed vapours.

## Revendications

1. Procédé pour l'élimination d'ammoniaque de vapeurs ammoniaquées contenant des acides carboxyliques, lesquelles vapeurs se forment par ébullition, stérilisation ou concentration par évaporation lors du traitement de mélanges aqueux de protéines ou de produits de dégradation de protéines, lequel procédé consiste à laver les vapeurs avec une solution d'un acide minéral circulant en circuit fermé,
caractérisé en ce que l'on lave les vapeurs avec une solution de nitrate d'ammonium et d'acide nitrique qui est à une température au moins égale à la température de vapeur saturée des vapeurs à épurer à la pression de traitement, et en ce que l'on prélève du nitrate d'ammonium formé par soutirage d'un flux partiel de solution de lavage, ce flux partiel étant soit complètement séparé afin d'être utilisé par ailleurs, soit recyclé vers la solution de lavage après séparation par cristallisation d'une partie du nitrate d'ammonium en solution.

2. Procédé conforme à la revendication 1, caractérisé en ce que les vapeurs sont lavées à une température de la solution de lavage comprise entre 105 et 120 °C et à la pression atmosphérique.

3. Procédé conforme à la revendication 1, caractérisé en ce que les vapeurs sont lavées à une température de la solution de lavage comprise entre 107 et 165 °C et à une pression de 108 à 500 kPa.

4. Procédé conforme à la revendication 1, caractérisé en ce que les vapeurs sont lavées à une température de la solution de lavage comprise entre 65 et 118 °C et à une pression comprise entre 20 et 95 KPa.

5. Procédé conforme à au moins une des revendications 1 à 4, caractérisé en ce que les vapeurs sont lavées avec une solution d'acide nitrique contenant de 40 à 70 % en poids de nitrate d'ammonium.

6. Procédé conforme à au moins une des revendications 1 à 5, caractérisé en ce que les vapeurs sont lavées avec une solution d'acide nitrique et de nitrate d'ammonium dont le pH est compris entre 1 et 4.

7. Procédé conforme à au moins une des revendications 1 à 6, caractérisé en ce que la concentration en HNO₃ dans la solution de nitrate d'ammonium est comprise entre 0,1 et 1 % en poids.

8. Procédé conforme à au moins une des revendications 1 à 7, caractérisé en ce que la concentration en nitrate d'ammonium de la solution est régulée par refroidissement ou chauffage de la solution.

9. Procédé conforme à au moins une des revendications 1 à 8, caractérisé en ce que les vapeurs, après traitement par la solution de nitrate d'ammonium et d'acide nitrique, sont condensées et en ce que les composants organiques contenus dans le condensat sont convertis en méthane en une étape de transformation biologique en anaérobiose.

10. Procédé conforme à la revendication 9, caractérisé en ce que le pH dans l'étape de transformation biologique en anaérobiose est régulé par addition de vapeurs non traitées aux vapeurs épurées.
